# EUROPÄISCHE PATENTANMELDUNG

(11) **EP 2 319 980 A1**
(43) Veröffentlichungstag der Anmeldung: **11.05.2011**
(21) Anmeldenummer: 09013875.1
(22) Anmeldetag: 05.11.2009
(51) Int. Cl.: D06M 15/643, D06M 16/00, A01N 25/34

(54) **Textilausrüstung zur Insektenabwehr**

(71) Anmelder: Cognis IP Management GmbH, 40589 Düsseldorf (DE)
(72) Erfinder: Mauer, Werner, 48324 Albersloh (DE); Mathis, Raymond, 40627 Düsseldorf (DE); Matz, Karsten, 45289 Essen (DE)

(57) **Zusammenfassung**

Textile Flächengebilde, die dadurch erhältlich sind, dass man eine Lösung (L) auf ein textiles Flächengebilde aufbringt, wobei die Lösung (L) ein Insekten-Repellent (I) und eine Bindemittel (B) enthält, mit der Maßgabe, dass das Bindemittel (B) eine Kombination aus einem Silicon-Elastomer (b1) und einem Silicon-Vernetzer (b2) ist, und wobei die zusätzliche Maßgabe gilt, dass das Insekten-Repellent (I) nicht in Mikrokapseln enthalten ist und dass die Lösung (L) frei ist von Acrylat-Bindemitteln, haben Insekten-abwehrenden Eigenschaften und zeichnen sich durch ausgezeichnete Waschpermanenz aus. Als Silicon-Elastomere (b1) werden dabei Verbindungen der Formel (i)

HOR₂SiO-(R₂SiO)ₓ-(RR¹SiO)_{y}-SiR₂OH (i)

eingesetzt, worin bedeuten: R = CH₃ ; R¹= eine gesättigte Alkylgruppe mit 1 bis 20 C-Atomen, die linear oder verzweigt oder alicyclisch sein kann und die ein bis zwei Aminogruppen enthält, wobei die Aminogruppen primär und/oder sekundär sein können; x und y sind unabhängig voneinander Zahlen im Bereich von 1 bis 100, und
als Silicon-Vernetzer (b2) werden Verbindungen der Formel (ii)

HOR₂SiO-(R₂SiO)ₙ-(RR²SiO)ₘ-SiR₂OH (ii)

eingesetzt, worin bedeuten: R = CH₃ ; R²= Wasserstoff; x und y sind unabhängig voneinander Zahlen im Bereich von 1 bis 100.

## Beschreibung

### Gebiet der Erfindung

Die Erfindung betrifft die Verwendung von Zusammensetzungen in Form einer Lösung enthaltend ein Insekten-Repellent und ein Bindemittel, wobei das Bindemittel eine Kombination aus einem speziellen Silicon-Elastomer und einem speziellen Silicon-Vernetzer ist.

### Stand der Technik

Malaria ist eine lebensgefährliche Infektionskrankheit, die durch einzellige Organismen (Plasmodien) hervorgerufen und über die in den Tropen und Subtropen heimische Anophelesmücke übertragen wird. Die Plasmodien befallen die roten Blutkörperchen und vermehren sich dort. Sind die Erreger ausgereift, platzt das Blutkörperchen und setzt neue Plasmodien frei. Die Zerstörung der roten Blutkörperchen ruft einen Fieberschub hervor. Die neuen Plasmodien befallen wiederum rote Blutkörperchen und vermehren sich dort weiter. Auf diese Weise wird ein Kreislauf in Gang gesetzt, der ohne medikamentöse Behandlung in den allermeisten Fällen durch Kreislaufkollaps oder Lungenödeme zum Tode führt.

Nach einer Schätzung der Weltgesundheitsorganisation (WHO) erkranken weltweit jährlich etwa 110 Millionen Menschen, bis zu 2,7 Millionen sterben an der Infektion. Damit ist die Malaria nach der Tuberkulose die zweithäufigste Erkrankung in der Welt. Durch den verstärkten Reiseverkehr erkranken zunehmend auch Touristen speziell an der gefährlichen Malaria tropica. Auch hier rechnet man inzwischen jährlich mit etwa 12.000 Fällen in Europa.

Malaria kann immer dann erfolgreich behandelt werden, wenn sie früh genug erkannt wird. Auch eine Malariaprophylaxe ist möglich (insbesondere mit Hilfe von Chininverbindungen, die früher aus der Rinde des Chinabaumes gewonnen wurden), wenn gleich hier je nach Region die Gefahr einer Resistenz der Erreger zunimmt. Der beste Schutz gegen Malaria besteht indes darin, gar nicht erst gestochen zu werden. Da die dämmerungs- und nachtaktive Ano-phelesmücke in der Nähe von Feuchtgebieten und stehenden Gewässern lebt, ist gegen Ende der Regenzeit die Malariagefahr besonders hoch. In dieser Zeit bilden sich in den Tropen überall kleine Tümpel, in denen die Mücke ihre Eier ablegen kann. Danach vermehren sich die Mücken explosionsartig. Nun ist es aber nicht immer möglich, der Gefahr einer Malariaerkrankung dadurch zu begegnen, dass man sich in den betroffenen Gebieten ausschließlich im Hochland zur Trockenzeit bewegt. Ähnliches trifft auch für andere Krankheiten zu, die ausschließlich durch Insektenstiche übertragen werden, wie z.B. das West Nile Virus oder die aus La Reunion bekannte Chikungunya-Krankeit.

Es besteht vielmehr das Bedürfnis nach Mitteln, mit deren Hilfe zuverlässig verhindert oder zumindest deutlich reduziert werden kann, dass es zu Infektionen infolge von Insektenstichen kommt. Bekannte Insektenabwehrstoffe, auch als Repellents bezeichnet, sind Sesquiterpene, Diethyltoluamid (DEET), Ethyl Butylacetylaminopropionat (IR3535) oder Hydroxyethyl Isobutyl Piperidine Carboxylate (Bayrepel), das auch Bestandteil der bekannten "Autan"-Mischung ist. Besonders wirksam sind jedoch Stoffe aus der Gruppe der Pyrethroide, die dem Gift der Chrysantheme sehr ähnlich sind und daher auch ihren Namen bezogen haben. Aus dieser Gruppe ist wiederum als besonders wirksam die Verbindung Permethrin bekannt:

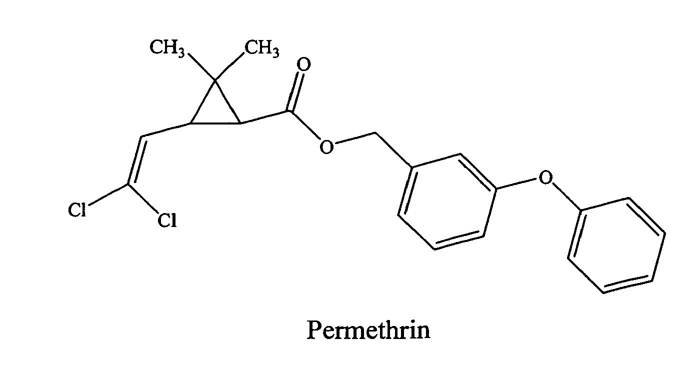

Eine Reihe dieser Repellents werden beispielsweise als Cremes, Lotionen oder Sprays direkt auf die Haut appliziert. Das Problem besteht jedoch darin, dass sie leicht durch Schweiß abgewaschen oder zersetzt werden und damit schnell ihre Wirksamkeit verlieren und nur solche Produkte überhaupt für diese Anwendung in Betracht kommen, die ausreichend hautverträglich und toxikologisch unbedenklich sind. Die besonders wirksamen natürlichen Chrysanthemen-Extrakte wie z.B. das Pyrethrum scheiden aus diesen Gründen daher regelmäßig aus, da sie durch Wasser hydrolysiert und durch Sonnenlicht zersetzt werden.

Eine Alternative zur topischen Applikation besteht darin, Textilien mit Insektenabwehrstoffen auszurüsten. Das Aufbringen der Repellents erfolgt dabei in der Regel durch Imprägnieren. In der Praxis erweist sich das aber als wenig effizient. Beim Aufbringen auf Strumpfhosen beispielsweise ist die Wirkstoffmenge wegen des weitmaschigen Gewebes so gering, dass die Abwehrwirkung per se schon unzureichend ist. Bei dichtmaschigeren Textilien, also Hosen, Hemden, T-Shirts, aber auch beispielsweise Zeltplanen, Moskito- und Tarnnetzen, beobachtet man, dass der Wirkstoff innerhalb kürzester Zeit ausgewaschen wird oder erst gar nicht für die Abwehr der Insekten zur Verfügung steht, weil er von den Fasern aufgesogen wird. Ein weiterer Nachteil besteht ferner darin, dass die direkte Applikation auf die Fasern oder Textilien eine hohe Einsatzmenge an Wirkstoffen erfordert, was besondere Anforderungen an die Arbeitssicherheit erforderlich macht.

Aus EP 1845186 ist bekannt Fasern und textile Flächengebilde mit Mischungen aus mikroverkapselten Insektenabwehrstoffen und Bindemitteln auszurüsten. Nachteilig an dieser Lösung ist die Tatsache, dass die Insektenabwehrstoffe erst durch bestimmte Prozesse wie mechanische Reibung aus den Mikrokapseln, in denen sie enthalten sind, freigesetzt werden müssen, damit sie zur Verfügung stehen.

EP 1598475 B 1 beschreibt ein Verfahren zur Herstellung textiler Flächengebilde mit Insekten-abweisenden Eigenschaften, wobei eine Lösung, die ein Insektizid und ein Bindemittel enthält, auf ein textiles Flächengebilde aufgebracht wird, mit der Maßgabe, dass das Insektizid Permethrin ist und dass die Lösung mit einer Kombination aus einem Acrylat-Bindemittel und einem Silicon-Elastomer versetzt wird, um die Retention des Permethrins während sukzessiver Wäschen des textilen Flächengebildes zu verbessern. Die spezifische in der EP 1598475 B 1 zum Einsatz kommende Bindemittel-Kombination enthält Acrylat-Bindemittel; dies hat den Nachteil, dass dadurch Textilien erheblich zu Versteifen neigen, insbesondere dann, wenn wie in der Schrift EP 1598475 B 1 offenbart, größere Mengen an Acrylaten zum Einsatz kommen. Der Tragekomfort der Textilien wird dadurch erheblich eingeschränkt.

EP 1845186 beschreibt ein Verfahren mittels verkapselter Insektizide.

### Beschreibung der Erfindung

Aufgabe der vorliegenden Erfindung war es einerseits, Insektenabwehrstoffe (Insekten-Repellents), insbesondere Permethrin, in einer solchen Form auf Textilien zu applizieren, dass die Insekten-Repellents ohne die Zuhilfenahme von Mikrokapseln zuverlässig an der Oberfläche der Textilien, insbesondere Bekleidungstextilien fixiert werden. Mit anderen Worten sollte eine andere technische Lösung bereit gestellt werden als in der oben zitierten EP 1845186 beschrieben, bei der die Repellents sich innerhalb von Mikrokapseln befinden und es eben die Mikrokapseln sind, die an der Textiloberfläche fixiert werden. Demgegenüber gilt für die vorliegende Erfindung, dass die Insekten-Repellents sich definitiv nicht in Mikrokapseln befinden, sondern als solche auf die Textiloberfläche fixiert werden sollen.

Eine weitere Aufgabe war es, dass die mit Insekten-Repellents ausgerüsteten Textilien eine gute Waschpermanenz aufweisen sollten.

Die zu entwickelnde technische Lösung der genannten Aufgaben sollte im übrigen den Einsatz von Acrylat-Bindemitteln vermeiden, weil diesen wie oben dargestellt eine gewisse Tendenz zur Versteifung der Textilien innewohnt.

Gegenstand der Erfindung ist zunächst ein Verfahren zur Herstellung textiler Flächengebilde mit Insekten-abwehrenden Eigenschaften, wobei eine Lösung (L) auf ein textiles Flächengebilde aufgebracht wird, wobei die Lösung (L) ein Insekten-Repellent (I) und eine Bindemittel (B) enthält,
wobei man als Bindemittel (B) eine Kombination aus
- einem Silicon-Elastomer (b1) der Formel (i)

   HOR₂SiO-(R₂SiO)ₓ-(RR¹SiO)_{y}-SiR₂OH (i)

   worin bedeuten: R = CH₃ ; R¹= eine gesättigte Alkylgruppe mit 1 bis 20 C-Atomen, die linear oder verzweigt oder alicyclisch sein kann und die ein bis zwei Aminogruppen enthält, wobei die Aminogruppen primär und/oder sekundär sein können; x und y sind unabhängig voneinander Zahlen im Bereich von 1 bis 100 und vorzugsweise von 1 bis 20
   und
- einem Silicon-Vernetzer (b2) der Formel (ii)

   HOR₂SiO-(R₂SiO)ₙ-(RR²SiO)ₘ-SiR₂OH (ii)

   worin bedeuten: R = CH₃ ; R²= Wasserstoff; n und m sind unabhängig voneinander Zahlen im Bereich von 1 bis 100 und vorzugsweise von 1 bis 20
   einsetzt, wobei die zusätzliche Maßgabe gilt, dass das Insekten-Repellent (I) nicht in Mikrokapseln enthalten ist und dass die Lösung (L) frei ist von Acrylat-Bindemitteln.

Aus Untersuchungen der Anmelderin geht hervor, dass textile Flächengebilde, insbesondere Kleidungstextilien, die nach dem erfindungsgemäßen Verfahren ausgerüstet wurden, sich durch eine ausgezeichnete Waschpermanenz auszeichnen, dass also die Retention des Insekten-Repellents während sukzessiver Wäschen des textilen Flächengebildes ganz ausgezeichnet ist. Es zeigte sich, dass nach einer Vielzahl von Wäschen (50 Wäschen, siehe Beispielteil) die Waschpermanenz beim erfindungsgemäßen Verfahren günstiger war als beim Verfahren gemäß des Standes der Technik (herangezogen wurde dabei die oben zitierte Schrift EP 1598475 B 1 (Utexbel).

Ein weiterer Erfindungsgegenstand sind textile Flächengebilde mit Insekten-abwehrenden Eigenschaften, dadurch erhältlich, dass man eine Lösung (L) auf ein textiles Flächengebilde aufbringt, wobei die Lösung (L) ein Insekten-Repellent (I) und eine Bindemittel (B) enthält, mit der Maßgabe, dass das Bindemittel (B) eine Kombination aus einem Silicon-Elastomer (b1) der oben genannten Formel (i) und einem Silicon-Vernetzer (b2) der oben genannten Formel (ii) ist, und wobei die zusätzliche Maßgabe gilt, dass das Insekten-Repellent (I) nicht in Mikrokapseln enthalten ist und dass die Lösung (L) frei ist von Acrylat-Bindemitteln.

Der Ausdruck "textile Flächengebilde" schließt im Rahmen der vorliegenden Erfindung sowohl textile Flächengebilde als solche ein, als auch Fasern, die zur Herstellung textiler Flächengebilde benutzt werden können. Mithin dient der Ausdruck "textile Flächengebilde" der sprachlichen Vereinfachung.

Ein weiterer Erfindungsgegenstand ist die Verwendung von Zusammensetzungen in Form einer Lösung (L), enthaltend ein Insekten-Repellent (I) und eine Bindemittel (B), mit der Maßgabe, dass das Bindemittel (B) eine Kombination aus einem Silicon-Elastomer (b1) der oben genannten Formel (i) und einem Silicon-Vernetzer (b2) der oben genannten Formel (ii) ist, und wobei die zusätzliche Maßgabe gilt, dass das Insekten-Repellent (I) nicht in Mikrokapseln enthalten ist und dass die Lösung (L) frei ist von Acrylat-Bindemitteln, zur Ausrüstung von textilen Flächengebilden.

### Das Insekten-Repellent (I)

Als Insektenabwehrstoffe, die im Sinne der vorliegenden Erfindung in Form von Mikrokapseln zur Ausrüstung der Fasern und Textilien verwendet werden können, kommen beispielsweise Sesquiterpene, Diethyltoluamid (DEET), Ethyl Butylacetylaminopropionat (IR3535), Hydroxyethyl Isobutyl Piperidine Carboxylate und insbesondere Pyrethroide sowie deren Gemische in Betracht.

Typische Beispiele für Pyrethroide sind 5-Benzyl-3-furylmethyl (+)-cis-(1R,3S,E) 2,2-dimethyl-3-(2-oxo-2,3,4,5-tetrahyfrothiophenylidenmethyl)cyclopropancarboxylat, 6-Chloropiperonyl 2,2-dimethyl-3-(2-methylpropenyl)cyclopropancarboxylat, Acrinathrin, Allethrin, Bifentrin, Bioresmethrin, Cismethrin, Cyclethrin, Cycloprothrin, Cyfluthrin, Cyhalothrin, Cypermethrin, Cyphenotrin, Deltamethrin, Dimethrin, Empenthrin, Esfenvalerat, Fenfluthrin, Fenpropathrin, Fenvalerat, Flucythrinat, Flumethrin, Fluvalinat, Furethrin, Halfenprox, Imiprothrin, Methyl cis/trans-3-(2,2-dichlorovinyl)-2,2-dimethylcyclopropan-1-carboxylat und insbesondere Permethrin sowie deren Gemische.

In einer bevorzugten Ausführungsform ist das Insekten-Repellent (I) Permethrin.

### Die Lösung (L)

An sich gibt es in Bezug auf die Natur der Lösung (L) keinerlei Einschränkungen. Vorzugsweise handelt es sich bei der Lösung (L) um eine wässigre Lösung.

Die Menge an Insekten-Repellent (I) in der wässrigen Lösung (L) liegt vorzugsweise im Bereich von 1 bis 300 g/l und insbesondere im Bereich von 10 bis 250 g/l.

Die Menge an Bindemittel (B) in der wässrigen Lösung (L) beträgt vorzugsweise mindestens 10 g/l und insbesondere mindestens 30 g/l.

Dabei liegt das Gewichtsverhältnis von Silicon-Elastomer (b1) und Silicon-Vernetzer (b2) vorzugsweise im Bereich von 5 : 1 bis 100 : 1.

### Die textilen Flächengebilde

An sich gibt es in Bezug auf die Natur der textilen Flächengebilde keinerlei Einschränkungen. Es kann jedes Material eingesetzt werden, dass in der Textiltechnik zum Einsatz kommt. Auch gibt es keine Einschränkung hinsichtlich der chemischen Natur der diesen textilen Flächengebilden zu Grunde liegenden Fasern. So kommen alle gängigen natürlichen und synthetischen Materialien sowie deren Gemische in Betracht, insbesondere aber Baumwolle, Polyamide, Polyester, Viskose, Polyamid/Lycra, Baumwolle/Lycra und Baumwolle/Polyester.

In einer bevorzugten Ausführungsform handelt es sich bei den textilen Flächengebilden um Bekleidungstextilien, wobei diejenigen Bekleidungstextilien, die in unmittelbarem Kontakt mit der Haut stehen oder die allgemein vor Insektenstichen schützen sollen besonders bevorzugt sind, beispielsweise Unterwäsche, Hemden, Hosen, T-Shirts, Uniformen, Moskito- und Tarnnetze.

In einer bevorzugten Ausführungsform ist das Insekten-Repellent (I) Permethrin, handelt es sich bei der Lösung (L) um eine wässigre Lösung und handelt es sich bei den textilen Flächengebilden um Bekleidungstextilien.

### Zu den Bindemitteln (B)

Wie allgemein bekannt sind Bindemittel polymere, filmbildende Stoffe. Wie ausgeführt setzt man als Bindemittel (B) eine Kombination aus einem Silicon-Elastomer (b1) und einem Silicon-Vernetzer (b2) ein. Dabei gilt die Randbedingung, dass Lösung (L) frei ist von Acrylat-Bindemitteln.

### Silicon-Elastomere (b1)

Als Silicon-Elastomere (b1) werden im Rahmen der vorliegenden Erfindung Substanzen der Formel (II) eingesetzt:

HOR₂SiO-(R₂SiO)ₓ-(RR¹SiO)_{y}-SiR₂OH (I)

worin bedeuten:
- R=CH₃;
- R¹= eine gesättigte Alkylgruppe mit 1 bis 20 C-Atomen, die linear oder verzweigt oder alicyclisch sein kann und die ein bis zwei Aminogruppen enthält, wobei die Aminogruppen primär und/oder sekundär sein können;
- x und y sind unabhängig voneinander Zahlen im Bereich von 1 bis 100 und vorzugsweise von 1 bis 20.

Aminoethylaminopropyl- und Aminopropyl-Gruppen sind als Reste R¹ besonders bevorzugt.

Besonders bevorzugte Verbindungen (b1) sind solche vernetzbaren Aminosiloxane, wie sie z.B. im Handelsprodukt "Cognis 3001-A" der Anmelderin enthalten sind.

Bei den Substanzen (b1) handelt es sich um vernetzbare Substanzen, also solche, die zwar unter Hinzuziehung anderer Substanzen sich vernetzen lassen, die aber selbst keine Vernetzer, also keine vernetzenden Substanzen, sind. Dementsprechend sind die Substanzen (b1) von den Substanzen (b2), die ja gerade vernetzende Eigenschaften aufweisen, verschieden.

### Silicon-Vernetzer (b2)

Unter Silicon-Vernetzern (b2) werden im Rahmen der vorliegenden Erfindung Substanzen der Formel (II) eingesetzt:

HOR₂SiO-(R₂SiO)ₙ-(RR²SiO)ₘ-SiR₂OH (II)

worin bedeuten:
- R=CH₃;
- R²= Wasserstoff;
- n und m sind unabhängig voneinander Zahlen im Bereich von 1 bis 100 und vorzugsweise von 1 bis 20.

Da der Rest R² Wasserstoff bedeutet, handelt es sich bei den Verbindungen (II) um hochreaktive Siloxanverbindungen ("H-Polydimethylsiloxane"), die vernetzende Substanzen darstellen. Die Verbindungen (b2) sind von den Verbindungen (b1) verschieden.

### Das Aufbringen einer Lösung (L) auf ein textiles Flächengebilde

Die Lösung (L) kann im Prinzip durch jedes dem Fachmann bekanntes Verfahren auf die auszurüstenden textilen Flächengebilde aufgebracht werden. So kann man beispielsweise textile Flächengebilde mit wässrigen Lösungen von Insekten-Repellent (I) und Bindemittel (B) durch das so genannten Ausziehverfahren imprägnieren, das etwa in einer handelsüblichen Waschmaschine oder in einem in der Textilindustrie üblichen Färbeapparat durchgeführt werden kann. Vorzugsweise kann man eine so genannte Zwangsapplikation durchführen, bei dem die auszurüstenden Substrate durch ein Tauchbad gezogen werden, welches Insekten-Repellent (I) und Bindemittel (B) enthält und wobei die Applikation dann mittels einer Presse unter Druck durchgeführt wird. Man spricht hier auch von einer Foulard-Applikation.

### Beispiele

### Verwendete Substanzen und Materialien:

Cognis 1008-P: wässrige Permethrin-Emulsion der Fa. Cognis mit einer Permethrinkonzentration von 5%.
Cognis 3001-A: wässrige Aminosiloxan-Emulsion der Fa. Cognis (Aminosiloxan gehört zur Gruppe der Elastomeren b1)
Cognis 3002-A: wässrige H-Polydimethylsiloxan-Emulsion der Fa. Cognis (H-Polydimethylsiloxan gehört zur Gruppe der Vernetzer b2)
Cognis 6004-B, Netzmittel, Fa. Cognis
Acronet 285 AM, Acrylat Copolymer, bestehend aus: MMA, Butyl acrylate und N-Methylol acrylamide, Firma Pulcra Chemicals
Textil-Material: BW/PES (50/50) Gewebe, 210g/m², Camouflage-Druck Laborfoulard, Fa. Mathis
Laborspannrahmen, Fa. Mathis

### Textil-Ausrüstung

### Beispiel 1

Es wurde ein BW/PES Militärgewebe mit Camouflage-Druck mit einem Flächengewicht von 210 g/m² am Foulard imprägniert. Zunächst wurde mit Wasser plus 5 g/l des Netzmittels Cognis 6004-B die Flottenaufnahme des Militärgewebes bestimmt, um anschließend die Konzentration die Behandlungsflotte gemäß der im Beispiel genannten Zielauflagen zu berechnen.

Die Flottenaufnahme betrug 50%, d.h. 1 kg Stoff nahm 0,5 kg Wasser auf. Entsprechend musste die Konzentration der Flotte angesetzt werden, so z.B. für eine Zielauflage von 15% Cognis 1008-P wurden 300 g/l Cognis 1008-P in der Flotte eingesetzt. Es wurde eine Konzentration von 15% Cognis 1008-P und 2% Cognis 3001-A bezogen auf das Textilgewicht eingestellt; somit enthielt die Flotte 300 g/l Cognis 1008-P und 40 g/l Cognis 3001-A sowie 5 g/l Netzmittel Cognis 6004-B.

Ein Textilmuster der Größe DIN A5 wurde am Laborfoulard mit der Flotte behandelt. Die Flottenaufnahme wurde durch Gewichtsbestimmung vor/nach Foulardierung kontrolliert.

Anschließend wurde das Textilmuster im Laborspannrahmen für 3 Minuten bei 150°C getrocknet bzw. fixiert.

### Beispiel 2

Wie Beispiel 1, jedoch wurde anstelle einer Menge von 2% 3001-A eine Menge von 5% Acronet 285 AM eingesetzt.

### Beispiel 3

Wie Beispiel 1, jedoch wurde zusätzlich eine Menge von 5% Acronet 285 AM eingesetzt.

Die Einsatzmengen der Beispiele 1 bis 3 sind nochmals der Übersicht halber in der nachfolgenden Tabelle 1 zusammengestellt:

**Tabelle 1: Vergleichsversuche**

| | Beispiel 1 | Beispiel 2 | Beispiel 3 |
|---|---|---|---|
| Permethrin-Emulsion 1008-P | 15% | 15% | 15% |
| 3001-A | 2% | | 2% |
| Acronet 285 AM | | 5% | 5% |
| Cognis 6004-B | 5g/l | 5g/l | 5g/l |

| | | | |
|---|---|---|---|
| Trocknung / Fixierung 3 min 150°C | | | |

### Beispiel 4

Wie Beispiel 1, jedoch wurden an Stelle von einer Menge von 2% 3001-A eine Menge von 4% 3001-A in Kombination mit 0,15% 3002-A eingesetzt:

Die Einsatzmengen des Beispiels 4 sind nochmals der Übersicht halber in der nachfolgenden Tabelle 2 zusammengestellt:

**Tabelle 2: erfindungsgemäßer Versuch**

| | Beispiel 4 |
|---|---|
| Permethrin-Emulsion 1008-P | 15% |
| 3001-A | 4% |
| 3002-A | 0,15% |
| Cognis 6004-B | 5 g/l |

| | |
|---|---|
| Trocknung / Fixierung 3 min 130°C | |

### Anwendungstechnische Untersuchungen

Die gemäß den Beispielen 1-3 (Vergleichsbeispiel) und Beispiel 4 (erfindungsgemäßes Beispiel) ausgerüsteten Textilien wurden auf Waschpermanenz untersucht. Die Wäschen wurden gemäß ISO 6330 bei 40°C mit phosphatfreiem ECE-Waschmittel durchgeführt. Der Gehalt der Textilien an Permethrin wurde zu Beginn (also nach 0 Wäschen, in den Tabellen 3 und 4 mit 0 W gekennzeichnet), nach 25 Wäschen (in den Tabellen 3 und 4 mit 25 W gekennzeichnet) und nach 50 Wäschen (in den Tabellen 3 und 4 mit 50 W gekennzeichnet) analytisch bestimmt (Extraktion mit Aceton/Acetonitril, Auswertung per GC/MS). Die Ergebnisse sind den nachfolgenden Tabellen 3 und 4 zu entnehmen.

**Tabelle 3: Vergleichsversuche**

| | Permethringehalt in % |
|---|---|
| Beispiel 1 / 0 W | 0,643 |
| Beispiel 2 / 0 W | 0,632 |
| Beispiel 3 / 0 W | 0,563 |
| Beispiel 1 /25 W | 0,138 |
| Beispiel 2 / 25 W | 0,279 |
| Beispiel 3 / 25 W | 0,261 |
| Beispiel 1 / 50 W | 0,047 |
| Beispiel 2 / 50 W | 0,155 |
| Beispiel 3 / 50 W | 0,164 |

**Tabelle 4: erfindungsgemäßer Versuch**

| | Permethringehalt in % |
|---|---|
| Beispiel 4 / 0 W | 0,533 |
| Beispiel 4 / 25 W | 0,252 |
| Beispiel 4 / 50 W | 0,179 |

Vergleicht man insbesondere den Permethringehalt der ausgerüsteten Textilien gemäß Beispiel 3 (Vergleich gemäß EP 1598475 B1) und Beispiel 4 (erfindungsgemäß) nach 25 bzw. 50 Wäschen, so zeigen die entsprechenden Werte (Abfall von 0,563 auf 0,261 auf 0,164 im Vergleich zu einem Abfall von 0,533 auf 0,252 auf 0,179), dass erfindungsgemäß leicht bis signifikant bessere Ergebnisse erzielt werden (Permethringehalt nach 25 Wäschen von 47,3% statt 46,4% im Vergleich zum ursprünglichen Permethringehalt vor den Wäschen; und ferner: Permethringehalt nach 50 Wäschen von 33,1% statt 29,1% im Vergleich zum ursprünglichen Permethringehalt vor den Wäschen).

Beim erfindungsgemäßen Beispiel 4 wurde zusätzlich der Weichriff deutlich verbessert; im Gegensatz dazu führte die Verwendung von Acrylat im Vergleichsbeispiel (Beispiel 3) zu einer Versteifung des Textils.

## Patentansprüche

1. Verfahren zur Herstellung textiler Flächengebilde mit Insekten-abwehrenden Eigenschaften, wobei eine Lösung (L) auf ein textiles Flächengebilde aufgebracht wird, wobei die Lösung (L) ein Insekten-Repellent (I) und eine Bindemittel (B) enthält, **dadurch gekennzeichnet, dass** man als Bindemittel (B) eine Kombination aus
• einem Silicon-Elastomer (b1) der Formel (i)
HOR₂SiO-(R₂SiO)ₓ-(RR¹SiO)_{y}-SiR₂OH (i)
worin bedeuten: R = CH₃ ; R¹= eine gesättigte Alkylgruppe mit 1 bis 20 C-Atomen, die linear oder verzweigt oder alicyclisch sein kann und die ein bis zwei Aminogruppen enthält, wobei die Aminogruppen primär und/oder sekundär sein können, x und y sind unabhängig voneinander Zahlen im Bereich von 1 bis 100
und
• einem Silicon-Vernetzer (b2) der Formel (ii)
HOR₂SiO-(R₂SiO)ₙ-(RR²SiO)ₘ-SiR₂OH (ii)
worin bedeuten: R = CH₃ ; R²= Wasserstoff; n und m sind unabhängig voneinander Zahlen im Bereich von 1 bis 100
einsetzt, wobei die zusätzliche Maßgabe gilt, dass das Insekten-Repellent (I) nicht in Mikrokapseln enthalten ist und dass die Lösung (L) frei ist von Acrylat-Bindemitteln.

2. Verfahren nach Anspruch 1, wobei das Insekten-Repellent (I) Permethrin ist, die Lösung (L) eine wässrigre Lösung ist und die textilen Flächengebilde Bekleidungstextilien sind.

3. Textile Flächengebilde mit Insekten-abwehrenden Eigenschaften, **dadurch** erhältlich, dass man eine Lösung (L) auf ein textiles Flächengebilde aufbringt, wobei die Lösung (L) ein Insekten-Repellent (I) und eine Bindemittel (B) enthält, mit der Maßgabe, dass das Bindemittel (B) eine Kombination aus einem Silicon-Elastomer (b1) der Formel (i) gemäß Anspruch 1 und einem Silicon-Vernetzer (b2) der Formel (ii) gemäß Anspruch 1 ist, und wobei die zusätzliche Maßgabe gilt, dass das Insekten-Repellent (I) nicht in Mikrokapseln enthalten ist und dass die Lösung (L) frei ist von Acrylat-Bindemitteln.

4. Verwendung von Zusammensetzungen in Form einer Lösung (L), enthaltend ein Insekten-Repellent (I) und eine Bindemittel (B), mit der Maßgabe, dass das Bindemittel (B) eine Kombination aus einem Silicon-Elastomer (b1) der Formel (i) gemäß Anspruch 1 und einem Silicon-Vernetzer (b2) der Formel (ii) gemäß Anspruch list, und wobei die zusätzliche Maßgabe gilt, dass das Insekten-Repellent (I) nicht in Mikrokapseln enthalten ist und dass die Lösung (L) frei ist von Acrylat-Bindemitteln, zur Ausrüstung von textilen Flächengebilden.
